# EUROPÄISCHE PATENTSCHRIFT

(11) **EP 2 290 580 B1**
(45) Veröffentlichungstag und Bekanntmachung des Hinweises auf die Patenterteilung: **12.12.2012**
(21) Anmeldenummer: 10007944.1
(22) Anmeldetag: 29.07.2010
(51) Int. Cl.: G06K 7/00

(54) **Kartenkontaktiervorrichtung**
Card contacting device
Dispositif de mise en contact de cartes

(30) Priorität: 21.08.2009 DE 102009038473
(43) Veröffentlichungstag der Anmeldung: 02.03.2011
(73) Patentinhaber: Amphenol-Tuchel Electronics GmbH, 74080 Heilbronn (DE)
(72) Erfinder: Bertsch, Michael, 74080 Heilbronn (DE)

(56) Entgegenhaltungen:
- EP-A1- 0 476 892

## Beschreibung

Die vorliegende Erfindung bezieht sich auf eine Kartenkontaktiervorrichtung gemäß dem Oberbegriff von Anspruch 1.

Insbesondere bezieht sich die vorliegende Erfindung auf eine Kartenkontaktiervorrichtung, welche mit einer Wärmeableitfähigkeit ausgestattet ist.

### Stand der Technik

Zunehmend werden in unterschiedlichen Applikationen und zur Abwicklung elektronischer Geschäftstransaktionen Kartenlesevorrichtungen eingesetzt, in welche Geld-, Cash- oder allgemein Chipkarten einsetzbar sind. Zunehmend werden heute Chipkarten auch im privaten Bereich, zum Beispiel für Set-Top-Boxen für digitales Fernesehen eingesetzt, sowie für die bargeldlose Bezahlung mittels Geldkarten.

Die hierzu verwendeten Chipkarten besitzen ein für sie eigenes Charakteristikum, nämlich, dass die Chipkarte eine Eingangs-/Ausgangsschnittstelle aufweist, sowie in der Regel einen Speicher umfasst, der teilweise mit einem Mikroprozessor ausgestattet ist. Die Chipkarten verfügen insofern über Steuerungseigenschaften, Speicherbereiche und Bearbeitungsfunktionen. Das Verfahren zum Datenzugang zu den Daten dieser Chipkarten, kann entweder kontaktierend oder kontaktfrei erfolgen. Für das kontaktierende Auslesen der Kartendaten wird eine Kartenkontaktiervorrichtung benötigt.

Im Stand der Technik gibt es eine Vielzahl unterschiedlicher Kartenkontaktiervorrichtungen, welche über viele zusätzliche Eigenschaften neben dem eigentlichen Kontaktieren der Karte verfügen. So muss die Kartenkontaktiervorrichtung feststellen, ob die Karte vollständig in ihrer Leseposition gesteckt ist. Andererseits muss auch überprüft werden, ob die Karte überhaupt korrekt, das heißt in korrekter Lage in die Kartenkontaktiervorrichtung eingeführt wurde.

Maßnahmen zum beabsichtigten und unbeabsichtigten Unterbrechen des Lesevorgangs und weitere elektronische, mechanische und technische Aufgaben führen dazu, dass die im Stand der Technik bekannten Kartenkontaktiervorrichtungen immer komplexer werden.

Hinzu tritt die mit dem Fortschreiten elektronischer Technologien verbundene Miniaturisierung aller Applikationen. Die Kartenkontaktiervorrichtungen werden immer dünner und der Markt verlangt nach so genannten Low-Profile-Kartenleser (Kartenleser niedriger Bauweise).

Nach dem Einführen der Karte in den Kartenleser entwickelt sich eine Erwärmung in folge des Leseprozesses am Übergang zwischen den Kontakten und dem Kontaktpad der Karte. Was insbesondere bei einer Vielzahl von Lese- und Schreibvorgängen zu einem konkreten Problem bei den Kartenlesern wird. Dementsprechend ist das Ausmaß der Wärme, die von der Chipkarte erzeugt wird, teilweise so beachtlich, dass es zu Störungen oder Wärmestau kommt. Es ist daher ein bevorzugter Wärmeableitungsaufbau bei den Kartenkontaktiervorrichtungen zu wählen.

Dieses Problem tritt verstärkt ort auf, wo die Bauhöhe des Kartenlesers und der vorhandene Bauraum in der Applikation so begrenzt ist, dass konkrete Maßnahmen zum Kühlen des Kartenlesers in unmittelbarer Lage oberhalb des Kartenlesers im Bereich der Wärmequelle nicht in Frage kommen können.

Da ein bevorzugter Wärmeableitungsaufbau oder eine entsprechende Einrichtung somit nicht unmittelbar auf der herkömmlichen Verbindungseinrichtung angeordnet werden kann, verursacht der Wärmeaufbau durch die Karte infolge der langen Nutzdauer oder des häufigen Benutzens eine Schädigung der elektronischen Teile an der Ableseeinrichtung, bei der Verbindungseinrichtung oder einer Schädigung der eingesetzten Chipkarte. Es kommt zu Störungen oder Unterbrechungen bei der Funktionalität der Leseeinrichtung. Daneben wird die Lebensdauer der Chipkarte verkürzt.

Aufgabe der vorliegenden Erfindung ist es daher, eine Kartenkontaktiervorrichtung bereit zu stellen, die vorbesagte Nachteile nicht aufweist.

Insbesondere ist es daher Aufgabe der vorliegenden Erfindung, eine Kartenkontaktiervorrichtung der Gestalt bereit zu stellen, die über verbesserte Wärmeableitfähigkeiten verfügt, unter der Prämisse der Kostenneutralität im Herstellungsprozess.

Weitere Aufgabe der vorliegenden Erfindung ist das Reduzieren der Baugröße und Anzahl der Bauteile unter Verbesserung der Lebensdauer von einer Kartenkontaktiervorrichtung.

Zur Erreichung der vorgenannten Ziele wird daher eine Kartenkontaktiervorrichtung gemäß dem vorliegenden Anspruch 1 bereitgestellt.

Bezüglich bevorzugter Ausgestaltungen der erfindungsgemäßen Einrichtung wird auf die Merkmale der Unteransprüche verwiesen.

Die erfindungsgemäße Kartenkontaktiervorrichtung besteht aus einem Isolierkörper mit darin ausgebildeten Lesekontakten zum Kontaktieren mit dem Kontaktpad einer Chipkarte, welche über einen erfindungsgemäßen Stufendeckel verfügt.

Mit Vorteil wird als Stufendeckel ein zwei- oder mehrstufen Deckel der Gestalt verwendet, dass jede Stufe eine Deckelebene definiert, welche unterschiedliche Funktionen für die Kartenkontaktiervorrichtung bereitstellt.

Mit Vorteil wird ein Deckelkörper als Stufendeckel so ausgebildet, dass jede der durch die Stufen beabstandete und dadurch gebildeten Ebenen eine eigene technische Wirkung zukommt.

In einer vorteilhaften Ausgestaltung verfügt der Stufendeckel über eine erste obere Ebene und eine zweite dazu beabstandete untere Ebene, welche über Stufen miteinander verbunden sind.

Dadurch verfügt der Stufendeckel über einen ersten Deckelabschnitt, welcher die Funktion der Wärmeableitung übernimmt und gleichzeitig die Funktion der Bildung des Kartenaufnahmeraumes, während der durch die dazu beabstandete zweite Ebene gebildete zweite Deckelabschnitt die eigentliche Deckelfunktion übernimmt unter Bildung eines Luftaustauschraumes.

Mit Vorteil trägt sowohl der erste Deckelabschnitt 8a wie auch der zweite Deckelabschnitt 8b zur Wärmeableitung in der erfindungsgemäßen Kartenkontaktiervorrichtung bei. Der Deckelkörper wird vorzugsweise aus einem wärmeleitfähigen Metallblech bereitgestellt.

Die erfindungsgemäße Kartenkontaktiervorrichtung verfügt darüber hinaus über Lesekontakte, die nahe dem Bereich der Kontaktkuppen über Haltemittel verfügen. Die Haltemittel sind mit Vorteil so ausgestaltet, dass die Lesekontakte daran gehindert werden, entgegen ihrer beabsichtigten Ausfederrichtung, die senkrecht zur Einsteckrichtung der Karte ist, auszufedern und dadurch einen ungewollten Kurzschluss zwischen den Kontakten und dem Deckel erzeugt werden.

Durch die Zusammenschau der erfindungsgemäßen Merkmale kann hierdurch ein flachbauender Kartenleser bereitgestellt werden, welcher über erhöhte Betriebssicherheit verfügt und eine deutlich verbesserte Wärmeableitfähigkeit besitzt.

Die Erfindung wird im folgenden anhand der Figuren dargestellt:
Fig. 1 zeigt eine perspektivische Ansicht der erfindungsgemäßen Kartenkontaktiervorrichtung;
Fig. 2 zeigt einen Schnitt durch die Kartenkontaktiervorrichtung gemäß Fig. 1.

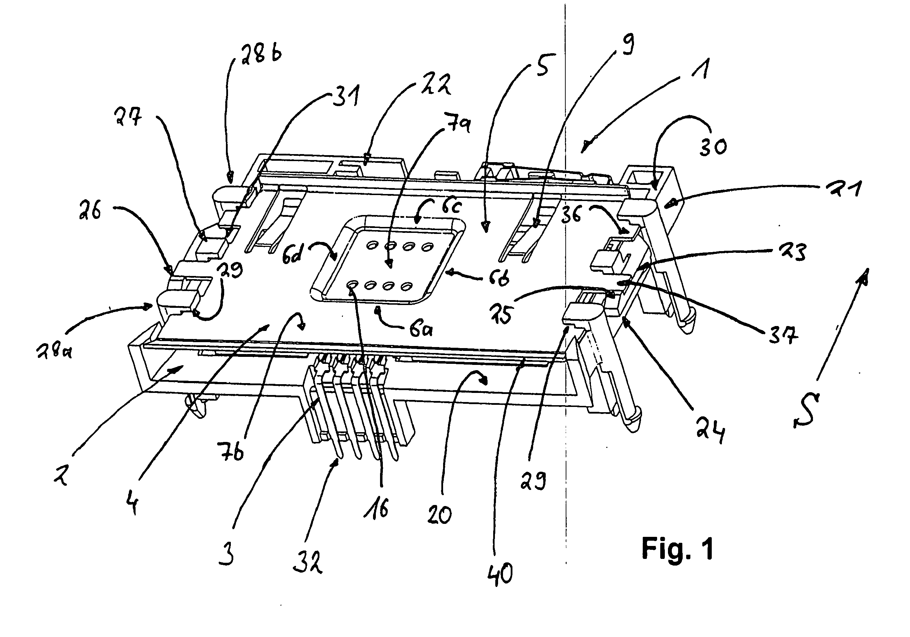

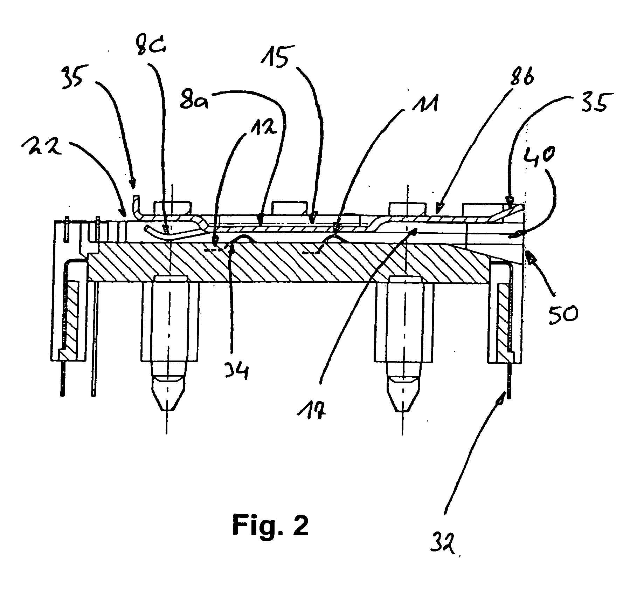

Es wird im folgenden auf die Fig. 1 und Fig. 2 Bezug genommen, die jeweils ein Ausführungsbeispiel der vorgenannten Erfindung wieder geben.

In Fig. 1 ist eine Kartenkontaktiervorrichtung 1 mit einem Isolierkörper 2 dargestellt. Der Isolierkörper 2 ist ein im wesentlichen der Größe einer Chipkarte entsprechender flachbauender Isolierkörper, in welchem eine Vielzahl paarweise beabstandeter Lesekontakte 3 angeordnet ist.

Der Isolierkörper 2 verfügt über einen Isolierkörperboden 20 und zwei Isolierkörperseitenwände 21. An einer Längsseite des Isolierkörpers 2 verläuft eine Kartenanschlagwand 22 zwischen den beiden Isolierkörperseitenwänden gegenüber der Einschuböffnung 40. An jeder der beiden Isolierkörperseitenwände 21 befindet sich ein Federarm 23. Der Federarm 23 ist mit seinem einen Ende an der Isolierkörperseitenwand 21 befestigt, während das freie Ende 24 beweglich ausgelenkt werden kann. Am freien Ende 24 des Federarms 23 befindet sich ein Rampenabschnitt 25. Zwischen dem Übergang des Rampenabschnittes 25 in Richtung des festen Endes 23 des Federarms befindet sich eine Stufe 26. Die Isolierkörperseitenwände 21 verfügen im Bereich zwischen dem freien Ende 24 eines jeden Federarms und dem an der Isolierkörperseitenwand 21 angebundenen festen Ende jeweils über ein Rastmittel 27. Beabstandet zum Rastmittel 27 befinden sich jeweils an jeder der Isolierkörperseitenwände 21 angeordnete zweite Rastmittel 28a, 28b. Die Rastmittel 27, 28a, 28b sind so ausgebildet, dass zwischen einer Unterseite 29 der Rastmittel und einer Oberseite 30 der Isolierkörperseitenwand ein Schlitz 31 zur Aufnahme des Stufendeckels gebildet wird.

Gemäß der in Fig. 1 gezeigten bevorzugten Ausführungsform werden daher drei voneinander getrennte Schlitze 31 an jeder der Isolierkörperseitenwände 21 bereitgestellt.

Im Isolierkörper 2 befinden sich acht Lesekontakte 3. Die Lesekontakte 3 verfügen über Anschlussenden 32 und Kontaktkuppen 11 zur Kontaktierung mit einer Chipkarte.

Am freien Ende 34 eines jeden Lesekontaktes 3 nahe der Kontaktkuppen 11 befindet sich ein Haltemittel 12 zum Unterhaken in einem entsprechenden Gegenrastmittel in der im Isolierkörper 2 der Kartenkontaktiervorrichtung 1. Diese Haltemittel 12 bewirken, dass der Federweg der Lesekontakte nach oben hin begrenzt ist. Dies stellt sicher, dass die Kontaktkuppen 11 nicht mit dem Stufendeckel 5 in Kontakt kommen können, wodurch ein Kuruzschluss entstehen könnte.

Die Kartenkontaktiervorrichtung 1 verfügt ferner über einen Deckelkörper 4, welcher sich im wesentlichen über die gesamte Oberfläche des Isolierkörpers 2 erstreckt. Der Deckelkörper 4 ist erfindungsgemäß als Stufendeckel 5 ausgebildet.

Mit Vorteil wird der Deckelkörper 4 als metallisches Bauteil hergestellt. In einer vorteilhaften Ausführungsform wird der Stufendeckel 5 dadurch erzeugt, dass ein Metallblech in die gemäß Fig. 1 gezeigte Form mittels Stanz-/Biegeprozesse gebracht wird. Wesentlich dabei zur Erreichung der erfindungsgemäßen Lehre ist die Ausbildung mindestens zweier voneinander beabstandeter Ebenen. Der Stufendeckel 5 verfügt, wie in Fig. 1 deutlich zu erkennen, über eine erste Ebene 7a, welche als untere Ebene ausgebildet ist und eine zweite Ebene 7b, welche als obere Ebene ausgebildet ist und die untere Ebene 7a im wesentlichen vollständig umgibt. Die erste Ebene 7a des Stufendeckels 5 ist mit der zweiten Ebene 7b mittels Stufen 6a, 6b, 6c, 6d verbunden.

Mit Vorteil handelt es sich bei der ersten Ebene 7a um ein im Tiefziehprozess aus der ursprünglichen zweiten Ebene 7b hergestellte und davon beabstandete Ebene 7a. Der Abstand der beiden Ebenen lässt sich durch die Tiefe des Tiefziehprozesses einstellen. Hierdurch entsteht im Stufendeckel 5 eine Wanne 15. Die Wanne 15 wird gebildet durch die erste Ebene 7a, in welche im gleichen Raster wie die Kontaktkuppen der Lesekontakte 3, Öffnungen 16 eingebracht sind. Die Öffnungen 16 sind mit ihrem Durchmesser derart ausgebildet, dass sichergestellt wird, dass es im Bereich der Kontaktkuppen 11 zu keinem elektrischen Kontakt mit der ersten Ebene 7a des Stufendeckels 5 ergeben kann. Hierdurch kann eine besonders flache Bauweise erreicht werden, in dem, wie in Fig. 2 ersichtlich, ein minimaler Kartenaufnahmeraum zwischen der Oberseite des Isolierkörpers 2 und der Unterseite des Stufendeckels 5 im Bereich der ersten Ebene 7a gewählt werden kann. Bei Einschieben einer Chipkarte in den Kartenaufnahmeraum können die Kontakte nach unten weg tauchen, wodurch ein Raum zwischen der Unterseite des Stufendeckels 5, gebildet durch die erste Ebene 7a und der Oberseite des Isolierkörpers 2 freigegeben wird, der im wesentliche der Kartendicke entspricht.

Sobald eine Chipkarte in die erfindungsgemäße Kartenkontaktiervorrichtung 1 eingeschoben ist, drücken die Lesekontakte in Folge ihrer Rückstellkraft die Karte im Bereich des Lesechips gegen die Unterseite des Stufendeckels im Bereich der ersten Ebene 7a. Da dieser Bereich einer Wärmequelle der Kartenkontaktiervorrichtung 1 entspricht, wird hierdurch ein Deckelabschnitt bereitgestellt, welcher als Wärmeableitbereich dient.

Anders ausgedrückt, verfügt der Stufendeckel 5 im Bereich der ersten Ebene 7a über einen ersten Deckelabschnitt 8a, welcher die Funktion der Wärmeableitung bereitstellt. Ferner verfügt der Stufendeckel 5 im Bereich der zweiten Ebene 7b über einen zweiten den ersten Deckelabschnitt umgebenen Deckelabschnitt 8b, welcher einen Spalt 17 ausbildet, zwischen der Oberfläche einer Chipkarte und dem zweiten Deckelabschnitt 8b. Somit ist die technische Funktion des zweiten Deckelabschnittes 8b die Ausbildung eines Luftspaltes 17. In diesem Luftspalt 17 kann die Wärme bestimmungsgemäß und gezielt durch Luftaustausch wegströmen. Zur Stabilität des Stufendeckels weist dieser, wie in Fig. 1 deutlich zu sehen ist, über seine gesamte Länge quer zur Einsteckrichtung der Chipkarte an seinem vorderen und hinteren Ende Aufkantungen 35 auf, die gebildet werden, durch Umbiegen der zweiten Deckelabschnitte 8b.

An den beiden Seitenkanten des Stufendeckels 5 befinden sich drei nach außen sich erstreckende Haltelaschen 36. Die Haltelaschen 36 sind so am Deckel ausgebildet, dass diese in die Schlitze 31 am Isolierkörper 2 haltend eingeführt werden können. Dabei verfügt mindestens eine der Haltelaschen 36 über einen längeren Haltelaschenabschnitt 37, welcher durch den Federarm 23 am Isolierkörper Federkraft beaufschlagt wird. Die Montage des Stufendeckels 5 wird dadurch bewerkstelligt, dass dieser in Karteneinsteckrichtung S mit seinen Haltelaschen 36 in die Schlitze 31 eingeführt wird, wobei der Haltelaschenabschnitt 37 auf dem Rampenabschnitt 25 des Federarms 23 aufläuft, bis er bei weiterem Verschieben gegen das Rastmittel 37 stößt und dabei über die Stufen 26 des Federarms 23 gleitet.

Bei Erreichen dieser Position drückt der Federarme 23 mit seiner Rückstellkraft den Haltelaschenabschnitt 37 nach oben, wodurch sich der Stufendeckel 5 in den Schlitzen 31 haltend verhakt.

Mit Vorteil verfügt der Stufendeckel 5 in einer dritten Ebene 7c über dritte Deckelabschnitte 8c, welche mit Vorteil als Deckelfedern 9 ausgebildet sind. Diese Deckelfedern erhöhen die Haltekraft auf die Chipkarte im Lesezustand, das heißt, sobald die Chipkarte in die Kartenkontaktiervorrichtung 1 eingeführt ist.

In der Leseposition der Chipkarte drücken die Deckelfedern 9 die Chipkarte entgegen der Federkraft der Lesekontakte 3 nach unten.

Durch diese erfindungsgemäße Ausführung ist es möglich, die Kartenkontaktiervorrichtung 1 ohne montierten Deckel in einem Reflow-Lötprozess auf die zu verwendete Leiterplatte zu löten, ohne dass Vorspannungen im Metalldeckel dazu führen, dass sich der Isolierkörper beim Erwärmen bis zur Löttemperatur verbiegt und in einen unerwünschten, nicht definierten Zustand gelangt. Nach dem Löten lässt sich auf einfache Weise der Stufendeckel 5 auf den Isolierkörper 2 in vorbeschriebener Weise aufbringen und mit den Rastmitteln 27, 28a, 28b verrasten.

Mit Vorteil kann der Stufendeckel 5 auch vor dem Reflow-Lötprozess kräftefrei in seine Endmontageposition gebracht werden.

In einer vorteilhaften Ausführungsform können neben dem Stufendeckel zum Wärmeableitfähigkeit und dem damit verbundenen Luftaustausch, weitere Maßnahmen zur Wärmeableitung getroffen werden. Als besonders günstig hat sich ein dunkel gefärbtes oder schwarzes Metallblech als Stufendeckel als besonders geeignet herausgestellt. Hierdurch tritt neben der Wärmekonvektion und der Wärmeleitung noch der Effekt der Wärmestrahlung hinzu, welcher ebenfalls einen positiven Beitrag auf die Wärmeableitfähigkeit der erfindungsgemäßen Kartenkontaktiervorrichtung hat.

### Bezugszeichenliste

### Kartenkontaktiervorrichtung

- 1: Kartenkontaktiervorrichtung
- 2: Isolierkörper
- 3: Lesekontakte
- 4: Deckelkörper
- 5: Stufendeckel
- 6a, 6b, 6c, 6d: Stufen
- 7a: erste Ebene
- 7b: zweite Ebene
- 7c: dritte Ebene
- 8a: erster Deckelabschnitt
- 8b: zweiter Deckelabschnitt
- 8c: dritter Deckelabschnitt
- 9: Deckelfedern

- 11: Kontaktkuppen
- 12: Haltemittel

- 15: Wanne
- 16: Öffnungen
- 17: Luftspalt

- 20: Isolierkörperboden
- 21: Isolierkörperseitenwände
- 22: Kartenanschlagwand
- 23: Federarm
- 24: freies Ende des Federarms
- 25: Rampenabschnitt
- 26: Stufe
- 27: Rastmittel
- 28a, 28b: Rastmittel

- 29: Unterseite der Rastmittel
- 30: Oberseite der Isolierkörperseitenwand
- 31: Schlitz
- 32: Anschlussenden
- 34: freie Enden
- 35: Aufkantungen
- 36: Haltelaschen
- 37: Haltelaschenabschnitt

- 40: Kartenaufnahmeraum

- 50: Einschuböffnung

## Patentansprüche

1. Kartenkontaktiervorrichtung (1) zum Einschieben einer Chipkarte umfassend einen Isolierkörper (2) mit einem Isolierkörperboden (20), einer Mehrzahl von Lesekontakten (3), sowie einen Deckelkörper (4), welcher mit dem Isolierkörper (2) unter Bildung eines Kartenaufnahmeraums (40) mit einer Einschuböffnung (50) für das Einschieben einer Chipkarte verbunden ist,
**dadurch gekennzeichnet, dass** der Deckelkörper (4) als Mittel zur Wärmeableitung als ein Stufendeckel (5) mit einem ersten Deckelabschnitt (8a) in einer ersten Ebene (7a) zur Kontaktierung der Karte und einem zweiten Deckelabschnitt (8b) in einer zur ersten Ebene (7a) im wesentlichen parallel verlaufenden und beabstandeten zweiten Ebene (7b) unter Bildung eines Luftspaltes (17) ausgebildet ist.

2. Kartenkontaktiervorrichtung (1) gemäß Anspruch 1, **dadurch gekennzeichnet,**
**dass** der Stufendeckel (5) als Stanz-Form-Biegeteil aus einem Metallblech hergestellt ist.

3. Kartenkontaktiervorrichtung (1) gemäß Anspruch 1 oder 2, **dadurch gekennzeichnet, dass** der erste Deckelabschnitt (8a) in einer gegenüber dem zweiten Deckelabschnitt (8b) tiefer liegenden Ebene in Bezug auf den Isolierkörperboden (20) angeordnet ist.

4. Kartenkontaktiervorrichtung (1) gemäß einem der vorhergehenden Ansprüche,
**dadurch gekennzeichnet, dass** der erste Deckelabschnitt (8a) mit dem zweiten Deckelabschnitt (8b) durch eine umlaufende Stufe (6a, 6b, 6c, 6d) verbunden ist.

5. Kartenkontaktiervorrichtung (1) gemäß einem der vorhergehenden Ansprüche,
**dadurch gekennzeichnet, dass** der erste Deckelabschnitt (8a) sich vollständig oberhalb der Lesonkontakte (3) im Bereich der Kontaktkuppen (11) befindet.

6. Kartenkontaktiervorrichtung (1) gemäß einem der vorhergehenden Ansprüche,
**dadurch gekennzeichnet, dass** bei vollständig eingeschobener Karte in die Leseposition der erste Deckelabschnitt (8a) an der Oberseite der eingeschobenen Karte berührend anliegt und sich zumindest teilweise im Bereich der Kontaktpads der Karte oberhalb der Kontaktkuppen (11) der Lesekontakte (3) befindet.

7. Kartenkontaktiervorrichtung (1) gemäß einem der vorhergehenden Ansprüche,
**dadurch gekennzeichnet, dass** der erste Deckelabschnitt (8a) im Bereich der Kontaktkuppen (11) Öffnungen (16) aufweist.

8. Kartenkontaktiervorrichtung (1) gemäß einem der vorhergehenden Ansprüche,
**dadurch gekennzeichnet, dass** der Abstand im Bereich zwischen dem ersten Deckelabschnitt (8a) und der Oberseite der Kontaktkuppen (11) im Kartenaufnahmeraum (40) kleiner gewählt ist, als die Dicke einer für die in die Kartenkontaktiervorrichtung (1) bestimmungsgemäß aufzunehmenden Karte.

9. Kartenkontaktiervorrichtung (1) gemäß einem der vorhergehenden Ansprüche,
**dadurch gekennzeichnet, dass** der Abstand zwischen der Unterseite des Stufendeckels (5) im Bereich des zweiten Deckelabschnittes (8b) bezüglich der Kartenauflagefläche im Isolierkörperboden (20) größer ausgebildet ist als die Dicke einer für die in die Kontaktiervorrichtung (1) bestimmungsgemäß aufzunehmenden Karte unter Bildung eines Schlitzes (17).

10. Kartenkontaktiervorrichtung (1) gemäß einem der vorhergehenden Ansprüche,
**dadurch gekennzeichnet, dass** der Isolierkörper über an den Isolierkörperseitenwänden angeformten Federarme (23), sowie über Rastmittel (27, 28a, 28b) verfügt und wobei der Stufendeckel (5) über Haltemittel (36) zum Verrasten des Deckels mit dem Isolierkörper (2) verfügt.

11. Kartenkontaktiervorrichtung (1) gemäß einem der vorhergehenden Ansprüche,
**dadurch gekennzeichnet, dass** wenigstens ein Haltemittelabschnitt (37) am Stufendeckel (5) von dem Federarm (23) mittels einer daran angebrachten Stufe (26) in seiner Position festgelegt wird.

12. Kartenkontaktiervorrichtung (1) gemäß einem der vorhergehenden Ansprüche,
**dadurch gekennzeichnet, dass** der Deckel über dritte Deckelabschnitte (8c) verfügt, welche schräg bezüglich dem ersten und zweiten Deckelabschnitt (8a, 8b) in den Kartenaufnahmeraum hinein verlaufen und diese als Deckelfedem (9) zum Halten der Karte ausgebildet sind.

13. Kartenkontaktiervorrichtung (1) gemäß einem der vorhergehenden Ansprüche, **dadurch gekennzeichnet, dass** der Deckel quer zur Einsteckrichtung S der Karte über mindestens eine nach oben über die gesamte Deckellänge verlaufende Aufkantung (35) verfügt.

14. Kartenkontaktiervorrichtung (1) gemäß einem der vorhergehenden Ansprüche, **dadurch gekennzeichnet, dass** die zu den Kontaktkuppen (11) benachbarten freien Enden der Lesekontakte (3) mit ihren Haltemitteln (12) so am Isolierkörper (2) unterhakt sind, dass die Lesekontakte damit über einen nach oben begrenzten Federweg in den Aufnahmeraum (40) verfügen.

## Claims

1. Card contacting device (1) for the insertion of a chip card, comprising a insulating body (2) having an insulating body base (20), a plurality of read contacts (3) and a covering body (4), which is connected to the insulating body (2), forming a card receiving chamber (40) having an insertion opening (50) for the insertion of a chip card, **characterized in that** the covering body (4) is formed as a means for dissipating heat as a stepped cover (5) having a first cover section (8a) in a first plane (7a) for contacting the card, and a second cover section (8b) in a second plane (7b) extending substantial parallel to the first plane (7a) at a distance, forming an air gap (17).

2. Card contacting device (1) according to Claim 1, **characterized in that** the stepped cover (5) is manufactured from a metal sheet as a punched, shaped and bent part.

3. Card contacting device (1) according to Claim 1 or 2, **characterized in that** the first cover section (8a) is arranged in a plane located deeper with respect to the second cover section (8b) in relation to the insulating body base (20).

4. Card contacting device (1) according to one of the preceding claims, **characterized in that** the first cover section (8a) is connected to the second cover section (8b) by a circumferential step (6a, 6b, 6c, 6d).

5. Card contacting device (1) according to one of the preceding claims, **characterized in that** the first cover section (8a) is located completely above the read contacts (3) in the area of the contact domes (11).

6. Card contacting device (1) according to one of the preceding claims, **characterized in that**, when a card is inserted completely into the reading position, the first cover section (8a) rests with contact on the top side of the inserted card and, at least partially in the area of the contact pads of the card, is located above the contact domes (11) of the read contacts (3).

7. Card contacting device (1) according to one of the preceding claims, **characterized in that** the first cover section (8a) has openings (16) in the area of the contact domes (11).

8. Card contacting device (1) according to one of the preceding claims, **characterized in that**, in the area between the first cover section (8a) and the top side of the contact domes (11) in the card receiving chamber (40), the distance is chosen to be smaller than the thickness of a card to be received in the card contacting device (1) as intended.

9. Card contacting device (1) according to one of the preceding claims, **characterized in that**, in the area of the second cover section (8b), the distance between the underside of the stepped cover (5) with respect to the card contact surface in the insulating body base (20) is designed to be larger than the thickness of a card to be received in the contacting device (1) as intended, forming a slot (17).

10. Card contacting device (1) according to one of the preceding claims, **characterized in that** the insulating body has spring arms (23) integrally moulded on the insulating body side walls, and latching means (27, 28a, 28b), and **in that** the stepped cover (5) has retaining means (36) for latching the cover to the insulating body (2).

11. Card contacting device (1) according to one of the preceding claims, **characterized in that** at least one retaining means section (37) on the stepped cover (5) is fixed in its position by the spring arm (23) by means of a step (26) made thereon.

12. Card contacting device (1) according to one of the preceding claims, **characterized in that** the cover has third cover sections (8c), which extend obliquely with respect to the first and second cover section (8a, 8b) into the card receiving chamber, and the said third cover sections are formed as cover springs (9) to retain the card.

13. Card contacting device (1) according to one of the preceding claims, **characterized in that**, transversely with respect to the insertion direction S of the card, the cover has at least one turned-up edge (35) extending upwards over the entire cover length.

14. Card contacting device (1) according to one of the preceding claims, **characterized in that** the free ends of the read contacts (3) that are adjacent to the contact domes (11) are hooked under the insulating body (2) by their retaining means (12) such that the read contacts therefore have an upwardly limited spring travel into the receiving chamber (40).

## Revendications

1. Système (1) de mise en contact de carte permettant d'insérer une carte à puce et comportant un corps isolant (2) doté d'un fond (20) du corps isolant, plusieurs contacts de lecture (3) ainsi qu'un corps de couvercle (4) relié au corps isolant (2) de manière à former un espace (40) de réception de carte doté d'une ouverture d'insertion (50) qui permet d'insérer une carte à puce, **caractérisé en ce que** le corps (4) de couvercle est configuré comme moyen de dégagement de chaleur sous la forme d'un couvercle étagé (5) doté d'une première partie de couvercle (8a) située dans un premier plan (7a) et destinée à établir le contact avec la carte et une deuxième partie de couvercle (8b) située dans un deuxième plan (7b) qui s'étend essentiellement en parallèle au premier plan (7a) et à distance de ce dernier, en formant un entrefer (17).

2. Système (1) de mise en contact de carte selon la revendication 1, **caractérisé en ce que** le couvercle étagé (5) est réalisé sous la forme d'une pièce de tôle métallique cintrée, façonnée et estampée.

3. Système (1) de mise en contact de carte selon les revendications 1 ou 2, **caractérisé en ce que** la première partie de couvercle (8a) est disposée par rapport au fond (20) du corps isolant dans un plan situé plus bas que la deuxième partie du couvercle (8b).

4. Système (1) de mise en contact de carte selon l'une des revendications précédentes, **caractérisé en ce que** la première partie du couvercle (8a) est reliée à la deuxième partie du couvercle (8b) par un gradin périphérique (6a, 6b, 6c, 6d).

5. Système (1) de mise en contact de carte selon l'une des revendications précédentes, **caractérisé en ce que** la première partie du couvercle (8a) est située entièrement au-dessus des contacts de lecture (3) au niveau des calottes de contact (11).

6. Système (1) de mise en contact de carte selon l'une des revendications précédentes, **caractérisé en ce que** lorsque la carte est complètement enfoncée dans la position de lecture, la première partie de couvercle (8a) repose en contact avec la face supérieure de la carte insérée et est située au moins en partie au niveau du tampon de contact de la carte, au-dessus des calottes de contact (11) des contacts de lecture (3).

7. Système (1) de mise en contact de carte selon l'une des revendications précédentes, **caractérisé en ce que** la première partie de couvercle (8a) présente des ouvertures (16) au niveau des calottes de contact (11).

8. Système (1) de mise en contact de carte selon l'une des revendications précédentes, **caractérisé en ce que** la distance de la partie située entre la première partie de contact (8a) et la face supérieure des calottes de contact (11) dans l'espace (40) de réception de la carte est plus petite que l'épaisseur d'une carte qui doit être reprise correctement dans le système (1) de mise en contact de carte.

9. Système (1) de mise en contact de carte selon l'une des revendications précédentes, **caractérisé en ce que** la distance entre la face inférieure du couvercle étagé (5) au niveau de la deuxième partie de couvercle (8b) par rapport à la surface de pose de la carte dans le corps isolant (20) est plus grande que l'épaisseur d'une carte qui doit être reprise correctement dans le dispositif (1) de mise en contact, en formant une fente (17).

10. Système (1) de mise en contact de carte selon l'une des revendications précédentes, **caractérisé en ce que** le corps isolant dispose de bras élastiques (23) formés sur les parois latérales du corps isolant ainsi que de moyens d'encliquetage (27, 28a, 28b), le couvercle étagé (5) disposant des moyens de maintien (36) qui permettent d'encliqueter le couvercle sur le corps isolant (2).

11. Système (1) de mise en contact de carte selon l'une des revendications précédentes, **caractérisé en ce qu'**au moins une partie (37) des moyens de maintien est immobilisée sur le couvercle étagé (5) par le bras élastique (23) au moyen de gradins (26) qui y sont ménagés.

12. Système (1) de mise en contact de carte selon l'une des revendications précédentes, **caractérisé en ce que** le couvercle dispose de troisièmes parties de couvercle (8c) qui s'étendent obliquement par rapport à la première et à la deuxième partie de couvercle (8a, 8b) dans l'espace de réception de la carte et **en ce qu'**elles sont configurées comme ressorts (9) de couvercle destinés à maintenir la carte.

13. Système (1) de mise en contact de carte selon l'une des revendications précédentes, **caractérisé en ce que** le couvercle dispose transversalement à la direction d'insertion S de la carte d'un chanfrein (35) qui s'étend vers le haut sur toute la longueur du couvercle.

14. Système (1) de mise en contact de carte selon l'une des revendications précédentes, **caractérisé en ce que** les extrémités libres des contacts de lecture (3) voisins des calottes de contact (11) sont accrochées par le bas sur le corps isolant (2) par le moyen de maintien (12) de telle sorte que les contacts de lecture disposent ainsi d'un parcours élastique limité vers le haut dans l'espace de réception (40).
